# EUROPEAN PATENT SPECIFICATION

(11) **EP 4 377 580 B1**
(45) Date of publication and mention of the grant of the patent: **14.05.2025**
(21) Application number: 22758014.9
(22) Date of filing: 25.07.2022
(51) Int. Cl.: F16C 13/00, F16C 19/06, B21C 23/00, B21C 23/10, B65G 39/02

(54) **PRE-STRETCHING ROLLER, METHOD OF MANUFACTURING THE PRE-STRETCHING ROLLER AND WINDING APPARATUS**
VORSTRECKWALZE, VERFAHREN ZUR HERSTELLUNG DER VORSTRECKWALZE UND WICKELVORRICHTUNG
ROULEAU DE PRÉ-ÉTIRAGE, PROCÉDÉ DE FABRICATION DU ROULEAU DE PRÉ-ÉTIRAGE ET APPAREIL D'ENROULEMENT

(30) Priority: 26.07.2021 IT 202100019835
(43) Date of publication of application: 05.06.2024
(73) Proprietor: Robopac S.p.A., 47892 Acquaviva Gualdicciolo (SM)
(72) Inventor: MORRI, Marco, 47892 Gualdicciolo (SM)
(74) Representative: Cicconetti, Andrea
(86) International application number: PCT/IB2022/056842
(87) International publication number: WO 2023/007351

(56) References cited:
- US-A1- 2002 169 059

## Description

The invention relates to machines and apparatuses for wrapping a load with a film of extensible material and in particular relates to a pre-stretching roller usable in an unwinding apparatus of a wrapping machine. The invention also relates to a method for manufacturing said pre-stretching roller and a wrapping apparatus comprising at least one of such pre-stretching rollers.

It is known in the packaging industry to wrap with a film or a film of extensible material, for example plastic, a load formed by a single product or by a plurality of products on a pallet. In particular, the known wrapping machines comprise at least one unwinding apparatus which is movable along and/or around a winding axis and which supports a reel of film from which the film is unwound to be wrapped around the load so as to form a series of strips or bands generally having a helical trend, by virtue of the combination of the relative linear and rotational movements between the unwinding apparatus and the load.

In addition to supporting a reel of film, the unwinding apparatus is generally provided with a pair of pre-stretching rollers suitable for stretching and unwinding the film and one or more guiding rollers to divert the film towards the load during the unwinding. The pre-stretching rollers rotate with different speeds so as to stretch or elongate the film during the unwinding from the reel. More precisely, a first pre-stretching roller (called a fast roller) rotates with a speed greater than the rotation speed of a second pre-stretching roller (called a slow roller) located upstream of the first pre-stretching roller with reference to a film unwinding direction. By appropriately adjusting the difference between the rotational speeds of the two pre-stretching rollers, it is possible to stretch or elongate by a defined amount, according to a fixed pre-stretch or elongation percentage, the film exiting from the unwinding apparatus before it is wrapped on the load.

The film is stretched before being wrapped on the load since the stretching, or elongation, allows the best use of the film and gives the latter physical-mechanical features such as to make it more suitable to withstand the forces acting on the load during the subsequent handling and transport. In particular, when the stretching force ceases, the elastic return of the film determines a clamping force on the load which ensures the containment of the latter. The stretching is generally expressed as a percentage of the ratio between the elongation of the film (difference between the final length of the stretched film and the original length) and the original length. The elongation imparted to the film is usually between 50 and 300%. The stretching or pre-stretching force exerted by the pre-stretching rollers also allows the thickness of the film to be considerably reduced so as to proportionally increase its length to wrap a greater load perimeter with the same initial amount of unwound film and also allows the mechanical features of the film to be changed.

The pre-stretching force to which the film is subjected to obtain a certain elongation ratio or percentage depends on the type of load to be wrapped (e.g., more or less stable products) and on a number of factors such as initial film thickness, the physical-mechanical features of the material of the film (type of material, composition, quantity and distribution of any internal impurities and inhomogeneities), the environmental conditions (temperature, humidity) in which the load is wrapped.

For driving the pre-stretching rollers, unwinding apparatuses are known comprising an electric motor which rotatably drives one of the two pre-stretching rollers, which acts as a motor roller (typically the fast roller) and, through a mechanical motion driving assembly, the other pre-stretching roller which acts as a driven roller (typically the slow roller). Thereby, a fixed driving ratio is imposed between the fast roller and the slow roller, depending on the value or percentage of pre-stretch or elongation to be obtained on the film. The mechanical driving assembly is substantially a speed reducer connecting the shaft of the fast roller to the shaft of the slow roller, reducing the angular rotation speed of the latter with respect to that of the fast roller.

Unwinding apparatuses are also known which comprise two electric motors that separately and independently drive the two pre-stretching rollers, allowing to vary the driving ratio quickly and easily, i.e., the pre-stretch percentage to be exerted on the film, also during operation.

Each pre-stretching roller substantially comprises a cylindrical body, or cylinder, made of metallic material, typically made of steel sheet, covered externally by a layer of elastomeric material (rubber) which ensures the necessary adhesion with the material of the film.

The cylinder is obtained, for example, by means of a rolling or calendering process from a steel sheet of suitable thickness. The cylinder thus obtained must have an almost constant circular section for its entire longitudinal extension and be axial-symmetrical with reference to one of its central longitudinal axes around which it is then rotated.

Two flanges are fixed to the opposite ends of the cylinder, for example by welding. The flange of an upper end of the cylinder is connected to and supports a driving pin intended to be coupled with the electric motor or speed reducer. The flange of the lower end of the cylinder is connected to a supporting pin intended to rotatably engage in a seat of a supporting frame of the unwinding unit so as to support the pre-stretching roller in rotation. In order to ensure a correct and balanced rotation of the presser roller around its longitudinal axis and to avoid dangerous oscillations and/or vibrations, the driving pin and the supporting pin must be exactly coaxial with each other and with the longitudinal axis.

The production process of a pre-stretching roller is thus particularly complex and laborious and the roller thus obtained is therefore quite expensive.

Furthermore, the driving pin must be shaped and/or sized based on the electric motor and/or the reducer to which it must be coupled and/or the structure and/or the dimensions of the unwinding apparatus.

Numerous versions of pre-stretching rollers must thus be envisaged and produced to create different types of unwinding apparatuses, which leads to an increase in production and stock management costs. A pre-stretching roller according to the preamble of claim 1 is shown in US 2002/169 059 A1.

An object of the invention is to overcome the disadvantages illustrated above and in particular to improve the known pre-stretching rollers mountable on unwinding apparatuses of wrapping machines suitable for wrapping a load with a film of extensible material.

Another object is to provide a pre-stretching roller which can be installed easily and quickly on any type of unwinding apparatus.

A further object is to create a pre-stretching roller having simple and economical construction and precise and reliable operation.

Another object is to provide a method for economically, quickly and accurately manufacturing a pre-stretching roller for an unwinding apparatus.

Another further object is to provide an unwinding apparatus for a wrapping machine provided with pre-stretching rollers having simple and economical construction and precise and reliable operation
A further object is to create an unwinding apparatus that is fast and easy to assemble and has precise and reliable operation.

In a first aspect of the invention, a pre-stretching roller is included for an unwinding apparatus of a wrapping machine according to claim 1.

In a second aspect of the invention, a manufacturing method is envisaged for making a pre-stretching roller for an unwinding apparatus of a wrapping machine according to claim 8. In a third aspect of the invention, an unwinding apparatus is provided which can be associated with a wrapping machine according to claim 11.

The pre-stretching roller of the invention mountable on an unwinding apparatus of a wrapping machine for interacting with a film of extensible plastic material, comprises a main body elongated along a longitudinal central axis and obtained by means of an extrusion process. The main body includes a first tubular element having a cylindrical shape and defining an external cylindrical wall suitable for interacting with the film; a second tubular element internal to the first tubular element and having a first end provided with a first seat suitable for receiving and coupling with a driving shaft of driving means of the unwinding apparatus and an opposite second end provided with a second seat suitable for receiving and coupling with a supporting pin for fixing the pre-stretching roller to the unwinding apparatus; a plurality of longitudinal vanes, parallel to the central axis and which connect the first tubular element to the second tubular element.

The second tubular element also comprises a plurality of longitudinal ribs, each of which is connected to a respective longitudinal vane.

By virtue of the seats made on the opposite ends of the second tubular element, the pre-stretching roller according to the invention can be easily mounted on an unwinding apparatus and connected, in particular, to a driving shaft of driving means of the unwinding apparatus. Furthermore, since the central body is made by means of an extrusion process, few machining operations are necessary for the machine tool to obtain the desired dimensions and geometric tolerances and to precisely and accurately make the first and second seats intended to receive the driving shaft and the supporting pin.

The particular structure of the central body comprising a first external tubular element and a second internal tubular element separated and spaced apart, but connected by a plurality of longitudinal vanes, makes it possible to obtain a lighter pre-stretching roller than the known pre-stretching rollers and at the same time resistant to mechanical stresses, in particular bending and twisting. In particular, the longitudinal ribs of the second internal tubular element allow to reduce the wall thickness and at the same time ensure an adequate structural resistance to the entire central body of the pre-stretching roller.

The method according to the invention for manufacturing a pre-stretching roller mountable on an unwinding apparatus of a wrapping machine comprising the steps of: extruding an elongated main body along a longitudinal central axis and comprising a first tubular element having a cylindrical shape and defining an external cylindrical wall suitable for interact with the film, a second tubular element inside the first tubular element and provided with a plurality of longitudinal ribs; a plurality of longitudinal vanes, parallel to the central axis and connecting the first tubular element to the second tubular element, each longitudinal rib of the second tubular element being connected to a respective longitudinal vane; making on a first end of the second tubular element a first seat suitable for receiving and coupling with a driving shaft suitable for rotating the pre-stretching roller; and making on an opposite second end of the second tubular element a second seat suitable for receiving and coupling with a supporting pin for fixing the pre-stretching roller on the unwinding apparatus.

By virtue of the extrusion process, the method of the invention allows to manufacture a central body which requires little machining by the machine tool in order to obtain the desired dimensions and geometric tolerances and to precisely and accurately make the seats destined to receive and be coupled with the driving shaft and the supporting pin. The extrusion process also makes it possible to manufacture a pre-stretching roller having such a structure (a first external tubular element and a second internal tubular element separated and spaced apart, but rigidly connected by a plurality of longitudinal vanes angularly spaced apart) as to reduce the mass and weight with respect to the known pre-stretching rollers and at the same time have high resistance values to mechanical stresses, in particular bending and twisting. In particular, the longitudinal ribs also made by extrusion on the second internal tubular element allow to reduce the wall thickness of the aforesaid second tubular element and at the same time ensure adequate structural resistance to the entire central body of the pre-stretching roller.

The unwinding apparatus of the invention associable with a wrapping machine for dispensing a film with which to wrap a load, comprises at least one pair of pre-stretching rollers suitable for unwinding from a reel and then pre-stretching a film and means of driving means for rotatably driving the pre-stretching rollers. Each pre-stretching roller comprises a main body elongated along a longitudinal central axis and obtained by an extrusion process, in particular of a metal alloy, and including a first tubular element having a cylindrical shape and defining an external cylindrical wall suitable for interacting with the film; a second tubular element inside the first tubular element and having a first end provided with a first seat suitable for receiving and coupling with a respective driving shaft of the driving means and an opposite second end provided with a second seat suitable for receiving and coupling with a supporting pin of the unwinding apparatus; a plurality of longitudinal vanes, parallel to the central axis and connecting the first tubular element to the second tubular element; the second tubular element further comprising a plurality of longitudinal ribs, in particular parallel to the central axis, each longitudinal rib being connected to a respective longitudinal vane.

By virtue of the pre-stretching rollers provided with seats made on the opposite ends of the second tubular element, the unwinding apparatus of the invention can be quickly assembled. More precisely, by virtue of the seats, the pre-stretching rollers can be easily mounted on the unwinding apparatus and connected to the driving shafts of its driving means.

The invention can be better understood and implemented with reference to the attached drawings which illustrate exemplifying and non-limiting embodiments thereof, in which:
- figure 1 is an interrupted front view of a pre-stretching roller of the invention;
- figure 2 is a section interrupted along the line II-II of figure 1;
- figure 3 is a section according to the line III-III of figure 1;
- figure 4 is a perspective view of an unwinding apparatus of the invention provided with a pair of pre-stretching rollers;
- figure 5 is a front view of the unwinding apparatus of figure 1 in which some parts have been removed to better illustrate the pre-stretching rollers;
- figure 6 is a front view of a variant of the unwinding apparatus of figure 1 in which some parts have been removed to better illustrate the pre-stretching rollers;
- figure 7 is an interrupted cross-section of a pre-stretching roller mounted on the unwinding apparatus of figure 5 and associated with a speed reducer;
- figure 8 is an enlarged section along the line VIII-VIII of figure 7;
- figure 9 is an interrupted front view of a pre-stretching roller of the invention mounted on the unwinding apparatus of figure 6 and associated with a shaft of an electric motor;
- figure 10 is a section according to the line X-X of figure 9;
- figure 11 is a partial section interrupted along the line XI-XI of figure 10;
- figure 12 is an enlarged partial detail of figure 11.

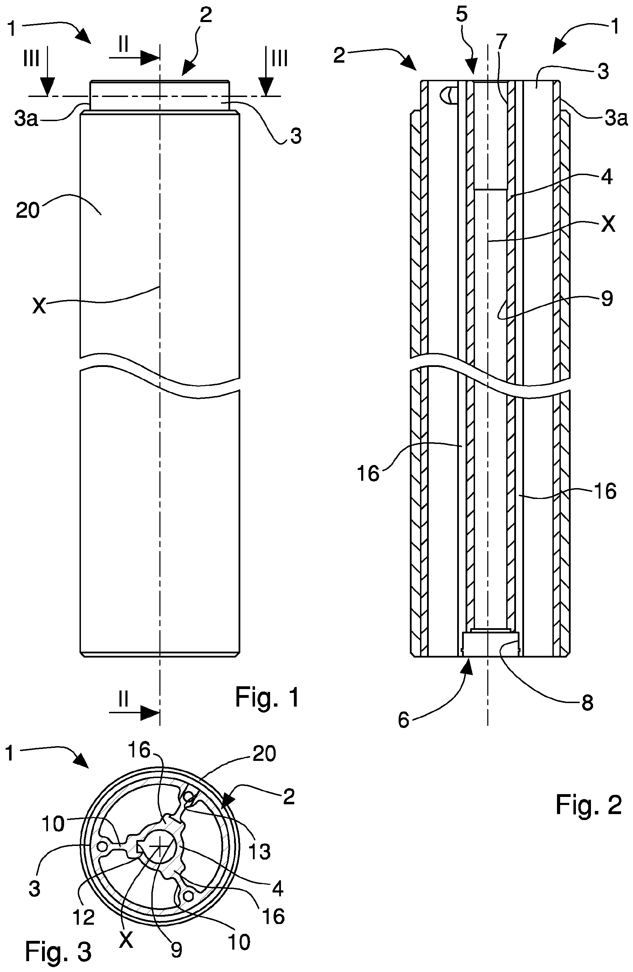

With reference to figures 1 to 12, the pre-stretching roller 1 according to the invention is illustrated, which can be mounted on an unwinding apparatus 100 of a wrapping machine and suitable for interacting with a film 50 of extensible plastic material, in particular suitable for unwinding the film 50 from a reel 60 and stretching it in cooperation with another identical pre-stretching roller 1.

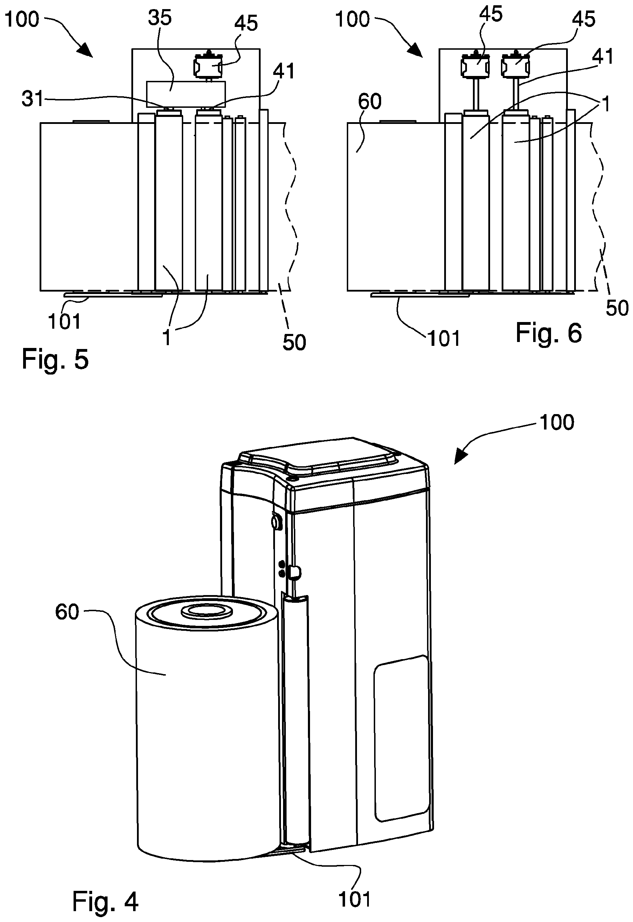

With reference to figures 4 to 6, the unwinding apparatus 100 of the invention comprises a pair of pre-stretching rollers 1 intended, by rotating at different speeds, to unwind the film 50 from a reel 60 and then pre-stretch or elongate it and driving means 45; 35 suitable for rotating, in particular around respective longitudinal axes, the pre-stretching rollers 1.

The driving means of the unwinding apparatus 100 can comprise a single rotary electric motor 45 coupled to and driving one of the pre-stretching rollers 1, which acts as a "fast" roller, and a speed reducer 35 driven by the electric motor 45 and coupled to and driving the other pre-stretching roller 1, which acts as a "slow" roller (fig. 5).

Otherwise, the driving means of the unwinding apparatus 100 can comprise two rotary electric motors 45 coupled to the respective pre-stretching rollers 1 to drive the latter separately and independently.

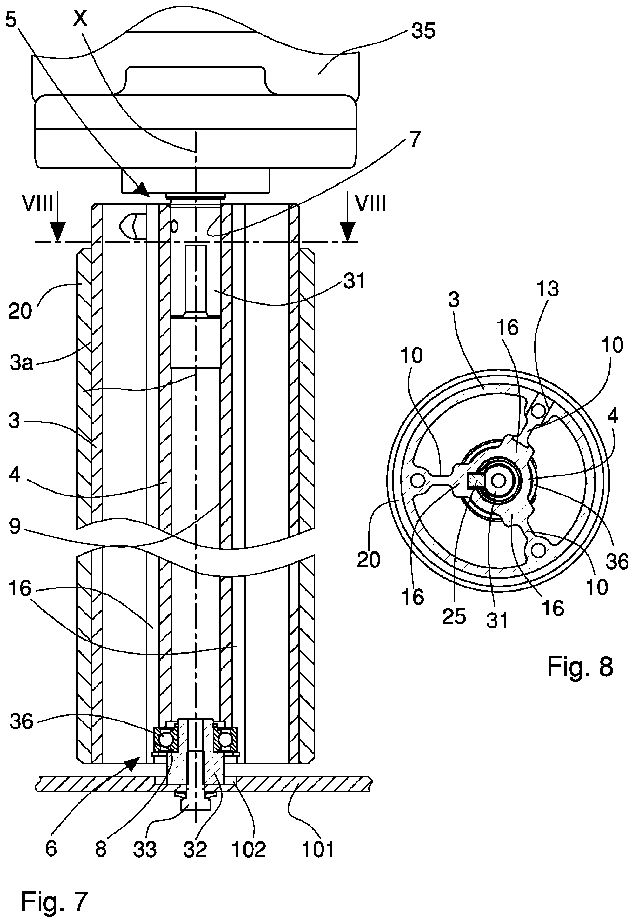

With reference to figures 7 and 8, the output shaft of the speed reducer 35 of the unwinding apparatus 100 of figure 5 is the second driving shaft 31 of the driving means connected to the respective pre-stretching roller 1.

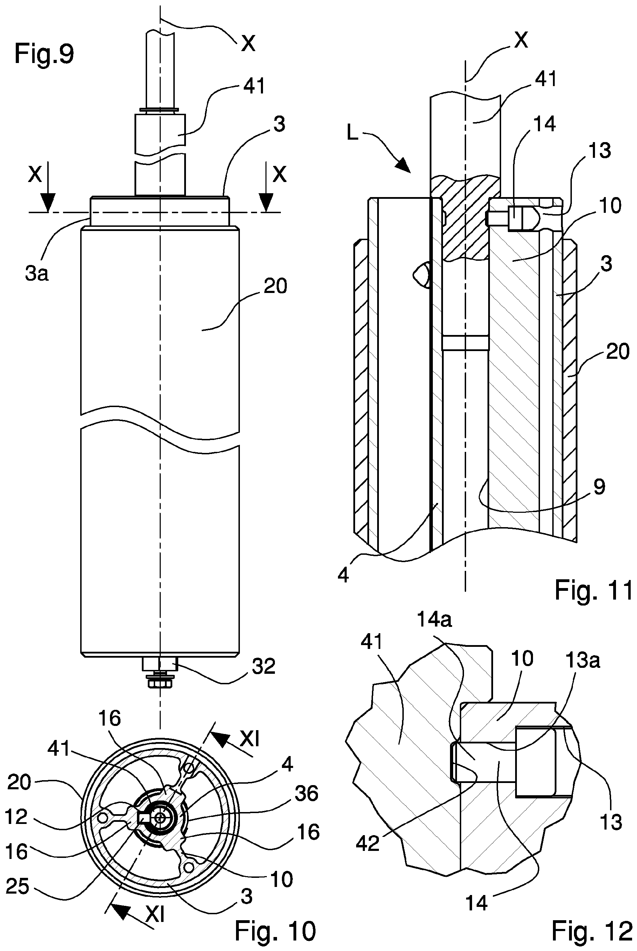

With reference to figures 9 to 12, the output shaft of the rotary electric motor 45 of the driving means of the unwinding apparatus of figure 5 and of the unwinding apparatus of figure 6 is the first driving shaft 41 of the driving means connected to the respective pre-stretching roller 1.

Referring to figures 1 to 3, each pre-stretching roller 1 comprises a main body 2 elongated along a longitudinal central axis X and obtained by an extrusion process. The main body 2 is for example made of metal alloy, in particular aluminium alloy.

The central axis X coincides with the rotation axis of the pre-stretching roller 1 when mounted on the unwinding apparatus 100.

The main body 2 includes a first tubular element 3, a second tubular element 4, and a plurality of longitudinal vanes 10.

The first tubular element 3 has a cylindrical shape and defines an external cylindrical wall 3a suitable for interacting with the film 50. The second tubular element 4, internal to the first tubular element 3 has a first end 5 provided with a first seat 7 suitable for receiving and coupling with a respective driving shaft 31, 41 arranged to rotate the pre-stretching roller 1 around the central axis X and an opposite second end 6 provided with a second seat 8 suitable for receiving and coupling with a supporting pin 32 of the unwinding apparatus.

The longitudinal vanes 10 are parallel to the central axis X and connect the first tubular element 3 to the second tubular element 4. More precisely, the longitudinal vanes 10 are almost radial with reference to the central axis X. Furthermore, the longitudinal vanes 10 are angularly spaced from each other around the central axis X.

The second tubular element 4 also comprises a plurality of longitudinal ribs 16, in particular parallel to the central axis X, each longitudinal rib 16 being connected to a respective longitudinal vane 10.

This structure of the second tubular element 4 with longitudinal ribs 16 allows to reduce the wall thickness of the second tubular element 4 and at the same time ensures an adequate structural strength to the entire central body 2.

The first tubular element 3 and the second tubular element 4 are coaxial to the central axis X.

The second tubular element 4 comprises a cylindrical through cavity 9; the first seat 7 and the second seat 8 are made in the cylindrical through cavity 9 at the first end 5 and the second end 6, respectively. The first seat 7 comprises an end portion of the cylindrical through cavity 9 and is provided with a longitudinal keyway 12, i.e., parallel to the main axis X, suitable for partially receiving a key or tab 25 for coupling with the driving shaft 31, 41. The tab 25 allows to transfer the rotation torque from the driving shaft 31, 41 to the pre-stretching roller 1. The second seat 8 is shaped to receive bearing means 36 suitable for rotatably supporting the supporting pin 32.

The bearing means 36 comprise, for example, a rolling body bearing fixed radially and axially in the second seat 8.

The supporting pin 32 is fixed, for example, by means of a screw 33 to a supporting plate 101 of the unwinding apparatus 100. More precisely, the supporting pin 32 is inserted in a seat 102 of the supporting plate 101 provided with a through hole for the screw 33.

The first seat 7 and the second seat 8 are made by machining the machine tool, allowing to quickly and easily obtain the necessary dimensions and geometries to ensure a precision coupling, with reduced dimensional and geometric tolerances, with the driving shaft 31, 41 and the bearing means 36.

The longitudinal groove 12 of the first seat 7 is made in one of the longitudinal ribs 16.

The pre-stretching roller 1 also comprises a coating 20 applied around the main body 2, in particular around the external cylindrical wall 3a, and made of material with a high friction coefficient, in particular in plastic and/or elastomeric material, to ensure the adhesion of the film on the pre-stretching roller 1 during the unwinding and pre-stretching.

The main body 2 of the pre-stretching roller 1 further comprises a transverse through opening 13 made at the first seat 7 of the second tubular element 4 and suitable for receiving a locking element 14 arranged to axially engage and lock the driving shaft 31, 41 in a locking configuration L, i.e., arranged to prevent linear movements of the driving shaft 31, 41 in the direction parallel to the central axis X (figures 11, 12).

The transverse through opening 13 is almost orthogonal to the central axis X, in particular it is radial with reference to the latter, and crosses the first tubular element 3, one of the longitudinal vanes 10 and the second tubular element 4.

The locking element 14 comprises a threaded pin and the transverse through opening 13 comprises a threaded portion 13a suitable for receiving and coupling with the threaded pin 14. The latter comprises an operating end 14a intended to engage in an annular groove 42 made on the driving shaft 41.

By virtue of the seats 7, 8 made on the opposite ends 5, 6 of the second tubular element 4, the pre-stretching roller 1 according to the invention can be easily mounted on the unwinding apparatus 100 and connected in particular to the driving shaft 31, 41. More precisely, the supporting pin 32 can be pre-assembled on the pre-stretching roller 1 to allow it to be subsequently mounted on the supporting plate 101 of the unwinding apparatus 100. In assembly, the driving shaft 31, 41 is inserted in the first seat 7 and coupled to the central body 2 by means of the tab 25.

Since the central body 2 is made by the extrusion of light metal alloy, typically aluminium, few machining operations are necessary for the machine tool to obtain the desired dimensions and geometric tolerances. The machining of the machine tool also makes it possible to create in a very precise and accurate manner the first 7 and the second seat 8 intended to receive the driving shaft 31, 41 and the bearing 36 of the supporting pin 32. In particular, it is possible to create coaxial and cylindrical seats which allow the pre-stretching roller to rotate even at high speeds without vibrations and/or oscillations.

The pre-stretching roller 1 of the invention can thus be easily and quickly mounted on any type of unwinding apparatus 100 since for mounting it only requires a suitable seat 102 on the supporting plate 101 for the supporting pin 32 and the end of a driving shaft 31, 41, of the electric motor or speed reducer, sized and positioned so as to be inserted and fixed in the first seat 7.

It should be noted that the pre-stretching roller 1 of the invention, in addition to being simple and cheap to make, has a versatile use and precise and reliable operation.

The use of a light metal alloy, in particular an aluminium alloy, and the particular structure (comprising a first external tubular element 3 and a second internal tubular element 4 separated and spaced apart, but rigidly connected by a plurality of longitudinal vanes 10 angularly spaced apart) allow to make a lighter pre-stretching roller 1 than the known pre-stretching rollers and at the same time resistant to mechanical stresses, in particular bending and twisting.

The method according to the invention for manufacturing a pre-stretching roller 1 mountable on an unwinding apparatus 100 of a wrapping machine and suitable for interacting with a film 50 of extensible plastic material, comprising the steps of:
- extruding a main body 2 in particular in metal alloy, in particular in aluminium alloy, elongated along a longitudinal central axis X and comprising:
   - a first tubular element 3 having a cylindrical shape and defining an external cylindrical wall 3a suitable for interacting with the film 50;
   - a second tubular element 4 inside the first tubular element 3 and provided with a plurality of longitudinal ribs 16, in particular parallel to the central axis X;
   - a plurality of longitudinal vanes 10, parallel to the central axis X and connecting the first tubular element 3 to the second tubular element 4, in which each longitudinal rib 16 of the second tubular element 4 is connected to a respective longitudinal vane 10;
- making on a first end 5 of the second tubular element 4 a first seat 7 suitable for receiving and coupling with a driving shaft 31; 41 suitable for rotating the pre-stretching roller 1; and
- making on an opposite second end 6 of the second tubular element 4 a second seat 8 suitable for receiving and coupling with a supporting pin 32 for fixing the pre-stretching roller 1 on the unwinding apparatus 100.

According to the method of the invention, making the first seat 7 and the second seat 8 comprises machining a cylindrical through cavity 9 of said second tubular element 4 at the first end 5 and the second end 6.

The method further includes making at the first seat 7 of the second tubular element 4 a transverse through opening 13 suitable for receiving a locking element 14 arranged to engage and axially lock the driving shaft 31; 41 in a locking configuration L. More precisely, it is envisaged to make the transverse through opening 13 almost orthogonal to the central axis X, in particular radially with reference to said central axis X, and through the first tubular element 3, one of the longitudinal vanes 10 and the second tubular element 4.

The method of the invention thus allows to manufacture in a simple and precise manner a pre-stretching roller 1 to be mounted on an unwinding apparatus of a wrapping machine and intended to interact with a film 50, in particular to unwind the film 50 from a reel 60 and stretch it in cooperation with another identical pre-stretching roller 1.

The process of extruding the metal alloy, in particular a light alloy, such as an aluminium alloy, allows to create a central body 2 which requires little machining by the machine tool to obtain the desired dimensions and geometric tolerances. The machining of the machine tool also allows the first and the second seat intended to receive the driving shaft 31, 41 and the bearing 36 of the supporting pin 32 to be made very precisely and accurately. In particular, it is possible to create coaxial and cylindrical seats which allow the pre-stretching roller to rotate even at high speeds without vibrations and/or oscillations

The extrusion process also allows to manufacture a pre-stretching roller having such a structure (an external tubular element 3 and an internal tubular element 4 separated and spaced apart, but rigidly connected by a plurality of longitudinal vanes 10 angularly spaced apart) as to reduce the mass and weight with respect to the known pre-stretching rollers and at the same time have high values of resistance to mechanical stresses, in particular bending and twisting

The invention further relates to an unwinding apparatus 100 associable with a wrapping machine for dispensing a film 50 of extensible plastic material with which to wrap a load, comprising at least one pair of pre-stretching rollers 1 suitable for unwinding from a reel 60 and then pre-stretching a film 50 and means of driving means 35; 45 for rotatably driving the pre-stretching rollers 1, each pre-stretching roller 1 comprising a main body 2 elongated along a longitudinal central axis X and obtained by means of an extrusion process, in particular of a metal alloy, and including a first tubular element 3 having a cylindrical shape and defining an external cylindrical wall 3a suitable for interacting with the film 50; a second tubular element 4 inside the first tubular element 3 and having a first end 5 provided with a first seat 7 suitable for receiving and coupling with a respective driving shaft 31; 41 of the driving means 35; 45 and an opposite second end 6 provided with a second seat 8 suitable for receiving and coupling with a supporting pin 32 of the unwinding apparatus 100; a plurality of longitudinal vanes 10, parallel to the central axis X and connecting the first tubular element 3 to the second tubular element 4; the second tubular element 4 further comprising a plurality of longitudinal ribs 16, in particular parallel to the central axis X, each longitudinal rib 16 being connected to a respective longitudinal vane 10.

The driving means 35, 45 comprise a rotary electric motor 45 coupled to and driving one of said pre-stretching rollers 1 by a respective first driving shaft 41 and a speed reducer 35 driven by the electric motor 45 and coupled to and driving by means of a second driving shaft 31 the other pre-stretching roller 1.

Alternatively, the driving means 35, 45 can comprise a pair of rotary electric motors 45 coupled and driving separately and independently the respective pre-stretching rollers 1 by means of respective first driving shafts 41.

By virtue of the pre-stretching rollers 1 provided with seats 7, 8 made on the opposite ends 5, 6 of the second tubular element 4, the unwinding apparatus 100 of the invention can be quickly assembled. More precisely, by virtue of the seats 7, 8, the pre-stretching rollers 1 can be easily mounted on the unwinding apparatus 100 and connected to driving shafts 31, 41 of its driving means 35, 45.

## Claims

1. Pre-stretching roller (1) of an unwinding apparatus (100) associable to a wrapping machine, comprising a main body (2) elongated along a longitudinal central axis (X) and manufactured by an extrusion process, in particular of a metal alloy, and including:
- a first tubular element (3) having a cylindrical shape and defining an external cylindrical wall (3a) suitable for interacting with a film (50);
- a second tubular element (4) internal to said first tubular element (3) and having a first end (5) provided with a first seat (7) suitable for receiving and coupling with a driving shaft (31; 41) of driving means (35; 45) of said unwinding apparatus (100) and an opposite second end (6) provided with a second seat (8) suitable for receiving and coupling with a supporting pin (32) for fixing said pre-stretching roller (1) to said unwinding apparatus (60);
- a plurality of longitudinal vanes (10), parallel to said central axis (X) and which connect said first tubular element (3) to said second tubular element (4);
**characterised in that**
said second tubular element (4) comprises a plurality of longitudinal ribs (16), in particular parallel to said central axis (X), each longitudinal rib (16) being connected to a respective longitudinal vane (10).

2. Pre-stretching roller (1) according to claim 1, wherein said second tubular element (4) comprises a cylindrical through cavity (9), said first seat (7) and said second seat (8) being made in said cylindrical through cavity (9) respectively at said first end (5) and at said second end (6).

3. Pre-stretching roller (1) according to claim 1 or 2, wherein said first seat (7) comprises a cylindrical portion provided with a longitudinal keyway (12) suitable for receiving a key or tab (25), in particular said longitudinal keyway (12) being made in one of said plurality of longitudinal ribs (16).

4. Pre-stretching roller (1) according to any preceding claim, comprising a transverse through opening (13) made at said first seat (7) of said second tubular element (4) and suitable for receiving a locking element (14) arranged for axially engaging and locking said driving shaft (31; 41) in a locking configuration (L), in particular said transverse through opening (13) being almost orthogonal to said central axis (X), in particular radial with reference to said central axis (X), and crossing said first tubular element (3), one of said longitudinal vane (10) and said second tubular element (4).

5. Pre-stretching roller (1) according to claim 4, wherein said locking element (14) comprises a threaded pin (14), said transverse through opening (13) comprising a threaded portion (13a) suitable for coupling with said threaded pin (14).

6. Pre-stretching roller (1) according to any preceding claim, wherein said longitudinal vanes (10) are almost radial with reference to said central axis (X), in particular angularly spaced from each other about said central axis (X).

7. Pre-stretching roller (1) according to any preceding claim, wherein said main body (2) is made of metal alloy, in particular aluminum alloy.

8. Method for manufacturing a pre-stretching roller (1) of an unwinding apparatus (100) comprising the steps of:
- extruding a main body (2) in particular made of metal alloy, in particular aluminum alloy, elongated along a longitudinal central axis (X) and comprising:
- a first tubular element (3) having a cylindrical shape and defining an external cylindrical wall (3a) adapted to interact with the film (50);
- a second tubular element (4) internal to said first tubular element (3) and provided with a plurality of longitudinal ribs (16), in particular parallel to said central axis (X);
- a plurality of longitudinal vanes (10), parallel to said central axis (X) and which connect said first tubular element (3) to said second tubular element (4), wherein each longitudinal rib (16) of said second tubular element (4) is connected to a respective longitudinal vane (10);
- making on a first end (5) of said second tubular element (4) a first seat (7) suitable for receiving and coupling with a driving shaft (31; 41) of the unwinding apparatus (100) suitable for rotating said pre-stretching roller (1);
- making on an opposite second end (6) of said second tubular element (4) a second seat (8) suitable for receiving and coupling with a supporting pin (32) for fixing said pre-stretching roller (1) to said unwinding apparatus (100).

9. Method according to claim 8, wherein said making said first seat (7) and said second seat (8) comprises machining a cylindrical through cavity (9) of said second tubular element (4) at said first end (5) and at said second end (6) respectively.

10. Method according to claim 8 or 9, further comprising making at said first seat (7) of said second tubular element (4) a transverse through opening (13) suitable for receiving a locking element (14) arranged for axially engaging and locking said driving shaft (31; 41) in a locking configuration (L), in particular said transverse through opening (13) being almost orthogonal to said central axis (X), in particular radially with reference to said central axis (X), and crossing said first tubular element (3), one of said longitudinal vanes (10) and said second tubular element (4).

11. Unwinding apparatus (100) associable to a winding machine for dispensing a film (50) with which to wrap a load, comprising at least a pair of pre-stretching roller (1) according to claim 1, suitable for unwinding from a reel (60) and then pre-stretching a film (50) and means of driving means (35; 45) for rotatably driving said pre-stretching rollers (1).

12. Unwinding apparatus (100) according to claim 11, wherein said second tubular element (4) comprises a cylindrical through cavity (9), said first seat (7) and said second seat (8) being made in said cylindrical through cavity (9) respectively at said first end (5) and said second end (6), in particular said first seat (7) comprising a cylindrical portion provided of a longitudinal keyway (12) suitable for receiving a key or a tab (25), in particular said longitudinal keyway (12) being made in one of said plurality of longitudinal ribs (16).

13. Unwinding apparatus (100) according to claim 11 or 12, comprising a transverse through opening (13) made at said first seat (7) of said second tubular element (4) and suitable for receiving a locking element (14) arranged for axially engaging and locking said driving shaft (31; 41) in a locking configuration (L), in particular said transverse through opening (13) being almost orthogonal to said central axis (X), in particular being radial with reference to said central axis (X) and crossing said first tubular element (3), one of said longitudinal vanes (10) and said second tubular element (4).

14. Unwinding apparatus (100) according to any claim 11 to 13, wherein said driving means (35; 45) comprise a rotary electric motor (45) coupled to and driving one of said pre-stretching rollers (1) by a respective first driven shaft (41) and a speed reducer (35) driven by said electric motor (45) and coupled to and driving by means of a second driving shaft (31) the other pre-stretching roller (1).

15. Unwinding apparatus (100) according to any claim 11 to 13, wherein said driving means (35, 45) comprise a pair of rotating electric motors (45) coupled to and driving the respective pre-stretching rollers (1) in a separate and independent way by respective first driving shafts (41).

## Patentansprüche

1. Vordehnwalze (1) einer Abwickelvorrichtung (100), die einer Einwickelmaschine zuordenbar ist, aufweisend einen Hauptkörper (2), der entlang einer longitudinalen Mittelachse (X) langgestreckt ist und durch ein Extrusionsverfahren, insbesondere aus einer Metalllegierung, hergestellt ist, und beinhaltend:
- ein erstes rohrförmiges Element (3), das eine zylindrische Form besitzt und eine zylindrische Außenwand (3a) definiert, die zum Zusammenwirken mit einer Folie (50) geeignet ist;
- ein zweites rohrförmiges Element (4), das sich innerhalb des ersten rohrförmigen Elements (3) befindet und ein erstes Ende (5), das mit einem ersten Sitz (7) versehen ist, der zum Aufnehmen und Koppeln mit einer Antriebswelle (31; 41) von Antriebsmitteln (35; 45) der Abwickelvorrichtung (100) geeignet ist, und ein gegenüberliegendes zweites Ende (6), das mit einem zweiten Sitz (8) versehen ist, der zum Aufnehmen und Koppeln mit einem Stützstift (32) zum Befestigen der Vordehnwalze (1) an der Abwickelvorrichtung (60) geeignet ist, besitzt;
- eine Mehrzahl von longitudinalen Trennwänden (10), die parallel zu der Mittelachse (X) verlaufen und das erste rohrförmige Element (3) mit dem zweiten rohrförmigen Element (4) verbinden;
**dadurch gekennzeichnet, dass** das zweite rohrförmige Element (4) eine Mehrzahl von Längsrippen (16) aufweist, die insbesondere parallel zu der Mittelachse (X) verlaufen, wobei jede Längsrippe (16) mit einer zugehörigen longitudinalen Trennwand (10) verbunden ist.

2. Vordehnwalze (1) nach Anspruch 1, wobei das zweite rohrförmige Element (4) einen zylindrischen durchgehenden Hohlraum (9) aufweist, wobei der erste Sitz (7) und der zweite Sitz (8) in dem zylindrischen durchgehenden Hohlraum (9) an dem ersten Ende (5) bzw. an dem zweiten Ende (6) ausgebildet sind.

3. Vordehnwalze (1) nach Anspruch 1 oder 2, wobei der erste Sitz (7) einen zylindrischen Abschnitt aufweist, der mit einer Längsnut (12) versehen ist, die zum Aufnehmen eines Keils oder einer Lasche (25) geeignet ist, insbesondere wobei die Längsnut (12) in einer der Mehrzahl von Längsrippen (16) ausgebildet ist.

4. Vordehnwalze (1) nach einem der vorhergehenden Ansprüche, aufweisend eine quer verlaufende Durchgangsöffnung (13), die an dem ersten Sitz (7) des zweiten rohrförmigen Elements (4) ausgebildet ist und zum Aufnehmen eines Verriegelungselements (14) geeignet ist, das zum axialen Eingriff und zur Verriegelung der Antriebswelle (31; 41) in einer Verriegelungskonfiguration (L) angeordnet ist, insbesondere wobei die quer verlaufende Durchgangsöffnung (13) nahezu orthogonal zu der Mittelachse (X), insbesondere radial in Bezug auf die Mittelachse (X), ist und das erste rohrförmige Element (3), eine der longitudinalen Trennwände (10) und das zweite rohrförmige Element (4) kreuzt.

5. Vordehnwalze (1) nach Anspruch 4, wobei das Verriegelungselement (14) einen Gewindestift (14) aufweist, wobei die quer verlaufende Durchgangsöffnung (13) einen Gewindeabschnitt (13a) aufweist, der zum Koppeln mit dem Gewindestift (14) geeignet ist.

6. Vordehnwalze (1) nach einem der vorhergehenden Ansprüche, wobei die longitudinalen Trennwände (10) in Bezug auf die Mittelachse (X) nahezu radial sind, insbesondere winklig zueinander um die Mittelachse (X) beabstandet.

7. Vordehnwalze (1) nach einem der vorhergehenden Ansprüche, wobei der Hauptkörper (2) aus einer Metalllegierung, insbesondere einer Aluminiumlegierung, besteht.

8. Verfahren zur Herstellung einer Vordehnwalze (1) einer Abwickelvorrichtung (100), das die Schritte aufweist:
- Extrudieren eines Hauptkörpers (2), insbesondere aus einer Metalllegierung, insbesondere einer Aluminiumlegierung, der entlang einer longitudinalen Mittelachse (X) langgestreckt ist und Folgendes aufweist:
- ein erstes rohrförmiges Element (3), das eine zylindrische Form besitzt und eine zylindrische Außenwand (3a) definiert, die ausgebildet ist, mit der Folie (50) zusammenzuwirken;
- ein zweites rohrförmiges Element (4), das sich innerhalb des ersten rohrförmigen Elements (3) befindet und mit einer Mehrzahl von Längsrippen (16) versehen ist, die insbesondere parallel zu der Mittelachse (X) verlaufen;
- eine Mehrzahl von longitudinalen Trennwänden (10), die parallel zu der Mittelachse (X) verlaufen und das erste rohrförmige Element (3) mit dem zweiten rohrförmigen Element (4) verbinden, wobei jede Längsrippe (16) des zweiten rohrförmigen Elements (4) mit einer zugehörigen longitudinalen Trennwand (10) verbunden ist;
- Herstellen eines ersten Sitzes (7) an einem ersten Ende (5) des zweiten rohrförmigen Elements (4), der geeignet ist, eine Antriebswelle (31; 41) der Abwickelvorrichtung (100), die geeignet ist, die Vordehnwalze (1) zu drehen, aufzunehmen und mit ihr zu koppeln;
- Herstellen eines zweiten Sitzes (8) an einem gegenüberliegenden zweiten Ende (6) des zweiten rohrförmigen Elements (4), der geeignet ist, einen Stützstift (32) zum Befestigen der Vordehnwalze (1) an der Abwickelvorrichtung (100) aufzunehmen und mit diesem zu koppeln.

9. Verfahren nach Anspruch 8, wobei das Herstellen des ersten Sitzes (7) und des zweiten Sitzes (8) ein Bearbeiten eines zylindrischen durchgehenden Hohlraums (9) des zweiten rohrförmigen Elements (4) an dem ersten Ende (5) bzw. an dem zweiten Ende (6) beinhaltet.

10. Verfahren nach Anspruch 8 oder 9, zudem aufweisend ein Herstellen einer quer verlaufenden Durchgangsöffnung (13) an dem ersten Sitz (7) des zweiten rohrförmigen Elements (4), die zum Aufnehmen eines Verriegelungselements (14) geeignet ist, das zum axialen Eingriff und zur Verriegelung der Antriebswelle (31; 41) in einer Verriegelungskonfiguration (L) angeordnet ist, insbesondere wobei die quer verlaufende Durchgangsöffnung (13) nahezu orthogonal zu der Mittelachse (X), insbesondere radial in Bezug auf die Mittelachse (X), ist und das erste rohrförmige Element (3), eine der longitudinalen Trennwände (10) und das zweite rohrförmige Element (4) kreuzt.

11. Abwickelvorrichtung (100), die einer Wickelmaschine zum Ausgeben einer Folie (50), mit der eine Ladung umwickelt werden soll, zuordenbar ist, aufweisend mindestens einem Paar Vordehnwalzen (1) nach Anspruch 1, geeignet zum Abwickeln von einer Rolle (60) und zum anschließenden Vordehnen einer Folie (50), und Antriebsmittel (35; 45) zum drehbaren Antreiben der Vordehnwalzen (1).

12. Abwickelvorrichtung (100) nach Anspruch 11, wobei das zweite rohrförmige Element (4) einen zylindrischen durchgehenden Hohlraum (9) aufweist, wobei der erste Sitz (7) und der zweite Sitz (8) in dem zylindrischen durchgehenden Hohlraum (9) an dem ersten Ende (5) bzw. dem zweiten Ende (6) ausgebildet sind, insbesondere wobei der erste Sitz (7) einen zylindrischen Abschnitt aufweist, der mit einer Längsnut (12) versehen ist, die zum Aufnehmen eines Keils oder einer Lasche (25) geeignet ist, insbesondere wobei die Längsnut (12) in einer der Mehrzahl von Längsrippen (16) ausgebildet ist.

13. Abwickelvorrichtung (100) nach Anspruch 11 oder 12, aufweisend eine quer verlaufende Durchgangsöffnung (13), die an dem ersten Sitz (7) des zweiten rohrförmigen Elements (4) ausgebildet ist und zum Aufnehmen eines Verriegelungselements (14) geeignet ist, das zum axialen Eingriff und zur Verriegelung der Antriebswelle (31; 41) in einer Verriegelungskonfiguration (L) angeordnet ist, insbesondere wobei die quer verlaufende Durchgangsöffnung (13) nahezu orthogonal zu der Mittelachse (X), insbesondere radial in Bezug auf die Mittelachse (X), ist und das erste rohrförmige Element (3), eine der longitudinalen Trennwände (10) und das zweite rohrförmige Element (4) kreuzt.

14. Abwickelvorrichtung (100) nach einem der Ansprüche 11 bis 13, wobei die Antriebsmittel (35; 45) einen rotierenden Elektromotor (45), der mit einer der Vordehnwalzen (1) gekoppelt ist und diese durch eine zugehörige erste Antriebswelle (41) antreibt, und einen Drehzahlminderer (35), der von dem Elektromotor (45) angetrieben wird und mit der anderen Vordehnwalze (1) gekoppelt ist und diese durch eine zweite Antriebswelle (31) antreibt, aufweisen.

15. Abwickelvorrichtung (100) nach einem der Ansprüche 11 bis 13, wobei die Antriebsmittel (35, 45) ein Paar rotierender Elektromotoren (45) aufweisen, die mit den jeweiligen Vordehnwalzen (1) gekoppelt sind und diese auf separate und unabhängige Weise durch zugehörige erste Antriebswellen (41) antreiben.

## Revendications

1. Rouleau de pré-étirement (1) d'un appareil de déroulement (100) pouvant être associé à une emballeuse, comprenant un corps principal (2) allongé le long d'un axe central longitudinal (X) et fabriqué par un processus d'extrusion, en particulier d'un alliage métallique, et comportant:
- un premier élément tubulaire (3) présentant une forme cylindrique et définissant une paroi cylindrique externe (3a) adaptée à l'interaction avec un film (50);
- un second élément tubulaire (4) interne audit premier élément tubulaire (3) et présentant une première extrémité (5) dotée d'un premier siège (7) adapté à la réception et à l'accouplement avec un arbre d'entraînement (31; 41) de moyens d'entraînement (35; 45) dudit appareil de déroulement (100) et une seconde extrémité opposée (6) dotée d'un second siège (8) adapté à la réception et à l'accouplement avec une tige de support (32) pour la fixation dudit rouleau de pré-étirement (1) audit appareil de déroulement (60);
- une pluralité de palettes longitudinales (10), parallèles audit axe central (X) et qui raccordent ledit premier élément tubulaire (3) audit second élément tubulaire (4);
**caractérisé en ce que**
ledit second élément tubulaire (4) comprend une pluralité de nervures longitudinales (16), en particulier parallèles audit axe central (X), chaque nervure longitudinale (16) étant raccordée à une palette longitudinale respective (10).

2. Rouleau de pré-étirement (1) selon la revendication 1, dans lequel ledit second élément tubulaire (4) comprend une cavité traversante cylindrique (9), ledit premier siège (7) et ledit second siège (8) étant réalisés dans ladite cavité traversante cylindrique (9) respectivement au niveau de ladite première extrémité (5) et au niveau de ladite seconde extrémité (6).

3. Rouleau de pré-étirement (1) selon la revendication 1 ou 2, dans lequel ledit premier siège (7) comprend une partie cylindrique dotée d'une rainure de clavette longitudinale (12) adaptée à la réception d'une clavette ou d'une languette (25), en particulier ladite rainure de clavette longitudinale (12) étant réalisée dans l'une de ladite pluralité de nervures longitudinales (16).

4. Rouleau de pré-étirement (1) selon une quelconque revendication précédente, comprenant une ouverture traversante transversale (13) réalisée au niveau dudit premier siège (7) dudit second élément tubulaire (4) et apte à recevoir un élément de verrouillage (14) agencé pour entrer en prise avec et verrouiller axialement ledit arbre d'entraînement (31; 41) dans une configuration de verrouillage (L), en particulier ladite ouverture traversante transversale (13) étant presque orthogonale audit axe central (X), en particulier radiale par rapport audit axe central (X), et traversant ledit premier élément tubulaire (3), l'une de ladite palette longitudinale (10) et ledit second élément tubulaire (4).

5. Rouleau de pré-étirement (1) selon la revendication 4, dans lequel ledit élément de verrouillage (14) comprend une tige filetée (14), ladite ouverture traversante transversale (13) comprenant une partie filetée (13a) adaptée à l'accouplement avec ladite tige filetée (14).

6. Rouleau de pré-étirement (1) selon une quelconque revendication précédente, dans lequel lesdites palettes longitudinales (10) sont presque radiales par rapport audit axe central (X), en particulier espacées angulairement les unes des autres autour dudit axe central (X).

7. Rouleau de pré-étirement (1) selon une quelconque revendication précédente, dans lequel ledit corps principal (2) est réalisé en alliage métallique, en particulier en alliage d'aluminium.

8. Procédé de fabrication d'un rouleau de pré-étirement (1) d'un appareil de déroulement (100) comprenant les étapes suivantes:
- l'extrusion d'un corps principal (2) en particulier réalisé en alliage métallique, en particulier en alliage d'aluminium, allongé selon un axe central longitudinal (X) et comprenant:
- un premier élément tubulaire (3) présentant une forme cylindrique et définissant une paroi cylindrique externe (3a) conçue pour interagir avec le film (50);
- un second élément tubulaire (4) interne audit premier élément tubulaire (3) et doté d'une pluralité de nervures longitudinales (16), en particulier parallèles audit axe central (X);
- une pluralité de palettes longitudinales (10), parallèles audit axe central (X) et qui raccordent ledit premier élément tubulaire (3) audit second élément tubulaire (4), dans lequel chaque nervure longitudinale (16) dudit second élément tubulaire (4) est raccordée à une palette longitudinale respective (10);
- la réalisation sur une première extrémité (5) dudit second élément tubulaire (4) d'un premier siège (7) adapté à la réception et à l'accouplement avec un arbre d'entraînement (31; 41) de l'appareil de déroulement (100) adapté à la rotation dudit rouleau de pré-étirement (1);
- la réalisation sur une seconde extrémité opposée (6) dudit second élément tubulaire (4) d'un second siège (8) adapté à la réception et à l'accouplement avec une tige de support (32) pour la fixation dudit rouleau de pré-étirement (1) audit appareil de déroulement (100).

9. Procédé selon la revendication 8, dans lequel ladite réalisation dudit premier siège (7) et dudit second siège (8) comprend l'usinage d'une cavité traversante cylindrique (9) dudit second élément tubulaire (4) au niveau de ladite première extrémité (5) et au niveau de ladite seconde extrémité (6) respectivement.

10. Procédé selon la revendication 8 ou 9, comprenant en outre la réalisation au niveau dudit premier siège (7) dudit second élément tubulaire (4) d'une ouverture traversante transversale (13) adaptée à la réception d'un élément de verrouillage (14) agencé pour entrer en prise avec et verrouiller axialement ledit arbre d'entraînement (31; 41) dans une configuration de verrouillage (L), en particulier ladite ouverture traversante transversale (13) étant presque orthogonale audit axe central (X), notamment radialement par rapport audit axe central (X), et traversant ledit premier élément tubulaire (3), l'une desdites palettes longitudinales (10) et ledit second élément tubulaire (4).

11. Appareil de déroulement (100) pouvant être associé à une enrouleuse pour la distribution d'un film (50) permettant d'envelopper une charge, comprenant au moins une paire de rouleaux de pré-étirement (1) selon la revendication 1, adapté au déroulement d'une bobine (60) puis au pré-étirement d'un film (50) et de moyens d'entraînement (35; 45) pour l'entraînement en rotation desdits rouleaux de pré-étirement (1).

12. Appareil de déroulement (100) selon la revendication 11, dans lequel ledit second élément tubulaire (4) comprend une cavité traversante cylindrique (9), ledit premier siège (7) et ledit second siège (8) étant réalisés dans ladite cavité traversante cylindrique (9) respectivement au niveau de ladite première extrémité (5) et de ladite seconde extrémité (6), en particulier ledit premier siège (7) comprenant une partie cylindrique dotée d'une rainure de clavette longitudinale (12) adaptée à la réception d'une clavette ou d'une languette (25), en particulier ladite rainure de clavette longitudinale (12) étant réalisée dans l'une de ladite pluralité de nervures longitudinales (16).

13. Appareil de déroulement (100) selon la revendication 11 ou 12, comprenant une ouverture traversante transversale (13) réalisée au niveau dudit premier siège (7) dudit second élément tubulaire (4) et adaptée à la réception d'un élément de verrouillage (14) agencé pour entrer en prise avec et verrouiller axialement ledit arbre d'entraînement (31; 41) dans une configuration de verrouillage (L), en particulier ladite ouverture traversante transversale (13) étant presque orthogonale audit axe central (X), en particulier radiale par rapport audit axe central (X) et traversant ledit premier élément tubulaire (3), l'une desdites palettes longitudinales (10) et ledit second élément tubulaire (4).

14. Appareil de déroulement (100) selon l'une quelconque des revendications 11 à 13, dans lequel lesdits moyens d'entraînement (35; 45) comprennent un moteur électrique rotatif (45) accouplé à et entraînant l'un desdits rouleaux de pré-étirement (1) par un premier arbre entraîné respectif (41) et un réducteur de vitesse (35) entraîné par ledit moteur électrique (45) et accouplé à et entraînant au moyen d'un second arbre d'entraînement (31) l'autre rouleau de pré-étirement (1).

15. Appareil de déroulement (100) selon l'une quelconque des revendications 11 à 13, dans lequel lesdits moyens d'entraînement (35, 45) comprennent une paire de moteurs électriques rotatifs (45) accouplés à et entraînant les rouleaux de pré-étirement respectifs (1) d'une manière séparée et indépendante par des premiers arbres d'entraînement respectifs (41).
